Europäisches Patentamt

European Patent Office

Office européen des brevets

(11) Publication number: **0 240 059**
A1

# EUROPEAN PATENT APPLICATION

(21) Application number: 87200493.2

(22) Date of filing: 17.03.87

(51) Int. Cl.³: **F 16 K 11/085**

(30) Priority: 19.03.86 NL 8600699

(43) Date of publication of application:
07.10.87 Bulletin 87/41

(84) Designated Contracting States:
CH DE FR GB IT LI NL SE

(71) Applicant: Van der Helm, Hermanus Cornelis
Middelweg 12
NL-2641 SM Pijnacker(NL)

(72) Inventor: Van der Helm, Hermanus Cornelis
Middelweg 12
NL-2641 SM Pijnacker(NL)

(54) Balanced rotary valve.

(57) The proposed hydraulic valve comprises a housing element (5) including flow channels (1, 2, 3, 4) and a valve element (7) mounted in the housing element and being rotatable therein, said valve element (7) comprising sealing elements (10, 11) for opening, closing and interconnecting the flow channels (1, 2, 3, 4).

The invention aims to reduce the friction caused by hydrostatic force action and the hydrodynamic force action caused by the flow and exerted on the rotatable valve element, to a neglegibly small valve, so that only a small operational force has to be exerted.

Hydrostatic balancing is attained by always using two oppositely disposed bores (2, 4) as the pressure inlet and two other oppositely disposed bores (1, 3) as the pressure outlet.

Hydrodynamic balancing is e.g. obtained by applying 4 recesses in the valve element, which, per set of two, are shifted over 90° with respect to each other and are disposed at different levels in the valve element.

FIG. 1

EP 0 240 059 A1

Rotary, balanced, hydraulic valve.

The invention relates to a rotary hydraulic valve, and particularly to a rotary hydraulic valve, the rotary valve member of which is balanced both hydrostatically and hydrodynamically, so that only a small operational force is to be exerted.

When moving the usual slide valves, cranes and the like e.g. for controlling a fluid flow from one part of the apparatus to another, the forces to be overcome are caused by friction and fluid motion. The frictional force is caused by the pressure difference on the sides of the movable valve member, i.e. the hydrostatic force action. The fluid motion gives rise to forces on the walls of the bores in the movable valve member, i.e. the hydrodynamic force action.

In order to reduce frictional forces, provisions for rotary valves and cranes are known for pressure release of the sealing planes, e.g. by means of pressure release chambers, disposed on either side of the bore in the movable valve member. These pressure release chambers can e.g. be connected to the pressure inlet or outlet through pressure release bores. These pressure release chambers bring about a steady division of pressure about the movable valve member.

The highest frictional forces usually occur in the closed position, when the movable valve member is exposed to the full conduit pressure (hydrostatic force action). The hydrodynamic force action is at the highest in its "open" position. At large volume flows, a bored rotary valve member can be maintained in its "open" position by the fluid flow.

The invention aims to provide a valve of the type stated in the introduction, in which this friction caused by hydrostatic force action and this hydrodynamic force action caused by flow are completely eliminated, or reduced to a negligibly small value, without making use of the provisions which exclusively serve to release pressure on the movable valve member.

Furthermore the invention aims to provide a rotary valve, which is constructed from relatively simple components, the composite parts of which can be manufactured from inexpensive materials.

Moreover it is aimed to manufacture a rotary valve with the aid of the measures according to the invention, with which large volume flows can be circuited at high frequencies under high pressure, with a minimum of power.

For this purpose the invention provides a rotary valve, of the type comprising a housing element, including flow channels and a valve seat, which is open to the exterior of the housing element and to the flow channels, and a valve element that can be mounted in the valve seat and is rotatable therein, which valve element comprises sealing elements for opening, closing and interconnecting flow channels.

The invention will now be further elucidated on the basis of the drawings, in which

figure 1 represents a cross-section of the rotary valve element in the housing element,

figure 2 represents a cross-section of another possible embodiment of the rotary valve element,

figure 3 represents a view of the rotary valve element

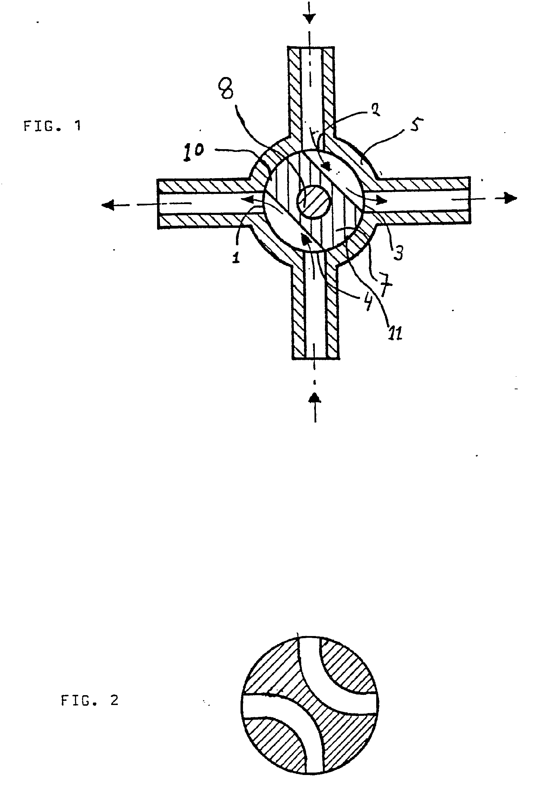

The flow channels 1, 2, 3 and 4 (vide figure 1) through the preferably cylindrical housing element 5, the centre lines of which are in a plane perpendicular to the axis of the cylindrical housing element, are at least divided cross-like over the wall of the housing element in one group of four (fig. 1). Each of the flow channels 1, 2, 3, 4 preferably comprises of a cylindrical bore, radially entering the housing element, with which each time two oppositely disposed bores, e.g. 2 and 4, serve as pressure inlet and two other oppositely disposed bores, e.g. 1 and 3, serve as pressure outlet.

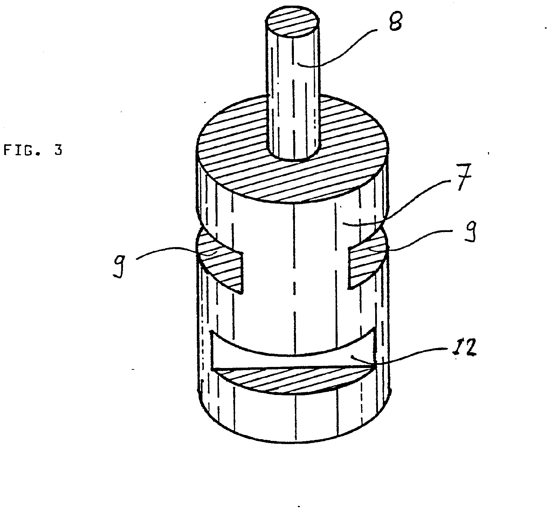

In the housing the valve element 7 is disposed, which has been fitted with a shaft 8 so that it can be turned by means of external driving (fig. 3). A preferably used driving can be performed by means of a computer-controlled step motor. Other operational means are also possible.

The valve element (fig. 3) has at least two recesses 9, each covering such a periphery of the valve element that the valve element is able to seal the in- and outlet gates 1, 2, 3, 4 with the planes 10, 11, while the height of the recesses corresponds to the flow channels in the housing element.

The two recesses 9 and the two recesses 12 are oppositely disposed per set of two recesses in a plane, and, per set of two, shifted over 90° with respect to each other along the periphery of the valve element, and they are located per set of two at different levels in the valve element.

If it is necessary for the valve element to be hydrodynamically balanced, there are at least four recesses in the valve element, which are, per set of two, shifted over 90° with respect to each other along the periphery of the valve element and which are located, per set of two, at different levels in the valve element, the arrangement being so that each set of recesses can control a group of four flow channels divided cross-like over the wall of the housing element.

In case of relatively small volume flows, it is sufficient to install one set of two oppositely disposed recesses in the valve element, for in this case only those forces have to be overcome which are brought about by the flow of the fluid, since the valve element is fully pressure-balanced, since always two oppositely disposed bores 2, 4 in the housing element 5 serve as pressure inlet and two other oppositely disposed bores 1, 3 in the housing element serve as pressure outlet (fig. 1).

The recesses in the valve element can also be devised in a different manner, e.g. in the shape of curved bores of the valve element (vide figure 2).

CLAIMS

1. A rotatary valve of the type, comprising a housing element (5), including flow channels, (1, 2, 3, 4) and a valve seat, which is open to the exterior of the housing element and to the flow channels, and a valve element (7) that can be mounted in the valve seat and is rotatable therein, and comprises a shaft so that it can be turned by means of external driving, which valve element comprises recesses for opening, closing and interconnecting flow channels, preferably in the shape of recesses (9) and (12) as in fig. 3 and in such a manner, that the flow channels, the centre lines of which are in a plane perpendicular to the axis of the preferably cylindrical housing, are at least divided in one group of four or more over the wall of the housing element, characterized in that each time two oppositely disposed flow channels serve as pressure inlet, and two other oppositely disposed flow channels serve as pressure outlet, resulting in a hydrostatic balancing of the valve element.

2. A rotatary valve according to claim 1 with recesses in the valve element, the centre lines of which are disposed per set of two recesses in a plane, which is perpendicualr to the centre line of the valve element, the arrangement being so that each oppositely disposed set of recesses can control a group of four flow channels divided cross-like over the wall of the housing element, characterized in that these recesses are arranged so that a second set of two recesses in the valve element is shifted over 90° with respect to the first set of two recesses along the periphery of the valve element, the centre lines of each set of two recesses being, in another plane, perpendicular to the axis of the valve element (vide figure 3), resulting in a hydrodynamic balancing of the valve element.

3. A rotatary valve according to claims 1 and 2, <u>characterized in that</u> the second set of recesses in the valve element is not shifted over 90°, but in which the pressure connection of the four flow channels at the second set of four, have been turned 90° with respect to the first set of four flow channels, resulting in a hydrodynamic balancing of the valve element.

4. A rotary valve according to claim 1 and based on the notion that a "counter-clockwise" deflection of the volume flow is understood to be a deflection of the volume flow as indicated in fig. 1 by arrows, <u>characterized in that</u> if in one or more of the planes perpendicular to the axis of the valve element a deflection of the volume flow takes place "counter-clockwise", there is an equally large volume flow to be deflected "clockwise".

5. A rotaraty valve according to claim 1 and based on the notion that a "counter-clockwise" deflection of the volume flow is understood to be a deflection of the volume flow as indicated in fig. 1 by arrows, <u>characterized in that</u> if in one or more of the planes perpendicular to the axis of the valve element a deflection of the volume flow takes place "clockwise", there is an equally large volume flow to be deflected "counter-clockwise".

6. Rotary valve according to one or more of the preceding claims, <u>characterized in that</u> the valve element is driven by a step motor.

HV/AB

FIG. 1

FIG. 2

FIG. 3

0240059

| | DOCUMENTS CONSIDERED TO BE RELEVANT | | EP 87200493.2 |
|---|---|---|---|

| Category | Citation of document with indication, where appropriate, of relevant passages | Relevant to claim | CLASSIFICATION OF THE APPLICATION (Int. Cl 4) |
|---|---|---|---|
| A | FR - A - 2 441 115 (ISAR INTERN. SERVOMECANISMES AUTOM.) <br> * Totality * <br> -- | 1-3 | F 16 K 11/085 |
| A | DE - A1 - 3 130 596 (WAGNER) <br> * Totality * <br> -- | 1,3 | |
| A | DE - C - 1 111 472 (DAIMLER-BENZ AG.) <br> * Fig. 1,3 * <br> -- | 1,3 | |
| A | DE - C - 1 159 230 (KOPONEN) <br> * Fig. 1,2 * <br> ---- | 1,3 | |
| | | | TECHNICAL FIELDS SEARCHED (Int. Cl.4) <br><br> F 16 K 11/00 |

The present search report has been drawn up for all claims

| Place of search | Date of completion of the search | Examiner |
|---|---|---|
| VIENNA | 17-07-1987 | ROUSSARIAN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82